# EUROPEAN PATENT APPLICATION

(11) **EP 4 815 575 A1**
(43) Date of publication of application: **30.09.2026**
(21) Application number: 24911396.0
(22) Date of filing: 27.12.2024
(51) Int. Cl.: H04W 52/24

(54) **POWER CONTROL METHOD AND APPARATUS**

(30) Priority: 28.12.2023 CN 202311837257
(71) Applicant: Huawei Technologies Co., Ltd., Shenzhen, Guangdong 518129 (CN)
(72) Inventor: LU, Jianzhong, Shenzhen, Guangdong 518129 (CN); XIE, Xinqian, Shenzhen, Guangdong 518129 (CN); SHAO, Jiafeng, Shenzhen, Guangdong 518129 (CN)
(74) Representative: Pfenning, Meinig & Partner mbB
(86) International application number: PCT/CN2024/142976
(87) International publication number: WO 2025/140475

(57) **Abstract**

This application provides a power control method and an apparatus. In the method, a first apparatus may receive first indication information from a second apparatus, to obtain path loss information used to calculate transmit power at which a first signal (for example, an uplink signal used for sensing) is sent, so that the first apparatus calculates the transmit power and/or power headroom more accurately. This helps the first apparatus flexibly adjust the signal transmit power based on a change in path loss information in a sensing scenario, thereby improving sensing performance.

## Description

This application claims priority to Chinese Patent Application No. 202311837257.8, filed with the China National Intellectual Property Administration on December 28, 2023 and entitled "POWER CONTROL METHOD AND APPARATUS", which is incorporated herein by reference in its entirety.

### TECHNICAL FIELD

This application relates to the field of communication technologies, and in particular, to a power control method and an apparatus.

### BACKGROUND

In a mobile communication network, path loss compensation may be performed for a communication link (from a signal transmitting end to a signal receiving end) based on an uplink power control technology. For example, based on the uplink power control technology, a terminal may send a reference signal to a network device, to obtain, through measurement, a loss in a path from the terminal to the network device, so that the terminal device performs path loss compensation for signal transmit power. A sensing scenario based on an integrated sensing and communication technology further includes a sensing link, where the sensing link is a link from the signal transmitting end to an environmental scatterer and from the environmental scatterer to the signal receiving end. Therefore, in the sensing scenario, if the terminal performs path loss compensation only by using the path loss of the communication link obtained based on measurement of the reference signal, problems that transmit power and power headroom calculated by the terminal are inaccurate and sensing performance deteriorates may be caused.

### SUMMARY

This application provides a power control method and an apparatus. In the method, sensing performance of a terminal can be improved in different sensing scenarios.

According to a first aspect, this application provides a power control method. The method is performed by a first apparatus, or is performed by a component (for example, a processor, a chip, or a chip system) of the first apparatus, or may be performed by a logical module that can implement all or some functions of the first apparatus. For example, the first apparatus is a terminal. The first apparatus receives first indication information from a second apparatus, where the first indication information indicates a path loss parameter of at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to the second apparatus through an environmental scatterer. The first apparatus sends second indication information to the second apparatus, where the second indication information indicates first power headroom of the first terminal, the first power headroom is a difference between maximum transmit power of the first terminal and transmit power of the first signal, and the transmit power of the first signal is determined based on a path loss parameter of the first terminal.

In the method, the first apparatus may receive the first indication information, to obtain path loss information used to calculate transmit power at which the first signal (for example, an uplink signal used for sensing) is sent, so that the first apparatus calculates the transmit power and/or power headroom more accurately. This helps the first apparatus flexibly adjust signal transmit power based on a change in path loss information in a sensing scenario, so that a requirement on transmit power of a sensing signal is met, thereby improving sensing performance.

In a possible implementation, the path through which the first signal passes includes one path or a plurality of paths for the first terminal; and the first indication information indicates a path loss parameter of the path for the first terminal, or the first indication information indicates a plurality of path loss parameters respectively corresponding to the plurality of paths for the first terminal.

In a possible implementation, the plurality of path loss parameters respectively corresponding to the plurality of paths include a path loss reference value and a plurality of correlation values, and the first apparatus performs a first operation on the path loss reference value and the plurality of correlation values, to determine the plurality of path loss parameters of the first terminal.

In the foregoing method, the first indication information may indicate a plurality of path loss parameters. For example, the first indication information may carry a path loss reference value and a plurality of correlation values, and a rule of the first operation is agreed, in advance, between the first apparatus and the second apparatus. In this case, the first apparatus may determine the plurality of path loss parameters of the first terminal through the first operation. For example, the first operation may be a basic operation, for example, an addition operation, a subtraction operation, a multiplication operation, or a division operation, or a variation of a basic operation, for example, an addition operation, a subtraction operation, a multiplication operation, or a division operation. This is not limited in this application.

In a possible implementation, the first apparatus determines a maximum value in the plurality of path loss parameters respectively corresponding to the plurality of paths for the first terminal, and the first apparatus determines, based on the maximum value in the path loss parameters, transmit power at which the first terminal sends the first signal.

In the method, the first apparatus may determine, based on the largest value in the path loss parameters, transmit power at which the first signal is sent, so that the transmit power at which the first terminal sends the first signal is higher. This helps compensate for a path loss in the path through which the first signal passes.

In a possible implementation, the first apparatus determines, based on an identifier of the first terminal, a path loss parameter that is in the first indication information and that is associated with the identifier of the first terminal; or the first apparatus determines, based on location information of the first terminal, a path loss parameter that is in the first indication information and that is associated with the location information of the first terminal.

In the method, the first apparatus may determine, from the first indication information (which may include path loss parameters corresponding to a plurality of terminals) and based on the identifier of the first terminal or the location information of the first terminal, a path loss parameter corresponding to the first terminal.

In a possible implementation, the first path loss value is determined based on location information of the first terminal, location information of the environmental scatterer, an area of a radar cross section of the environmental scatterer, and a carrier frequency of the first signal; and the first path loss variation value is a difference between a first measurement value and the first path loss value, where the first measurement value is a path loss value that is determined based on the location information of the first terminal and that is of a line-of-sight path for a reference signal.

In a possible implementation, the second indication information further indicates a path loss parameter used by the first apparatus to determine the first power headroom.

In the method, the first apparatus may further feed back, to the second apparatus, a path loss parameter actually used by the first terminal, to feed back a sensing capability of the first terminal.

According to a second aspect, this application provides a power control method. The method is performed by a second apparatus, or is performed by a component (for example, a processor, a chip, or a chip system) of the second apparatus, or may be performed by a logical module that can implement all or some functions of the second apparatus. For example, the second apparatus is a network device (for example, a base station). The second apparatus sends first indication information to at least one first apparatus, where the first indication information indicates a path loss parameter of the at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to the second apparatus through an environmental scatterer. The second apparatus receives second indication information from the first apparatus, where the second indication information indicates first power headroom of the first terminal, the first power headroom is a difference between maximum transmit power of the first terminal and transmit power of the first signal, and the transmit power of the first signal is determined based on a path loss parameter of the first terminal.

In the method, the second apparatus sends the first indication information, to indicate, to the first apparatus, path loss information used to calculate transmit power at which the first signal is sent. This helps the first apparatus flexibly adjust signal transmit power based on a change in path loss information in a sensing scenario, so that a requirement on transmit power of a sensing signal is met, thereby improving sensing performance.

In a possible implementation, the path through which the first signal passes includes one path or a plurality of paths for the first terminal; and the first indication information indicates a path loss parameter of the path for the first terminal, or the first indication information indicates a plurality of path loss parameters respectively corresponding to the plurality of paths for the first terminal.

In a possible implementation, the plurality of path loss parameters respectively corresponding to the plurality of paths include a path loss reference value and a plurality of correlation values, and the path loss reference value and the plurality of correlation values are used by the first apparatus to determine, based on a first operation, the plurality of path loss parameters of the first terminal.

In the foregoing method, the second apparatus may indicate a plurality of path loss parameters of the first apparatus. For example, the first indication information may carry a path loss reference value and a plurality of correlation values, and a rule of the first operation is agreed, in advance, between the first apparatus and the second apparatus. In this case, the second apparatus indicates, to the first apparatus, a path loss reference value and a plurality of correlation values that are used for the first operation.

In a possible implementation, the first path loss value is determined based on location information of the first terminal, location information of the environmental scatterer, an area of a radar cross section of the environmental scatterer, and a carrier frequency of the first signal; and the first path loss variation value is a difference between a first measurement value and the first path loss value, where the first measurement value is a path loss value that is determined based on the location information of the first terminal and that is of a line-of-sight path for a reference signal.

In a possible implementation, the second indication information further indicates a path loss parameter used by the first apparatus to determine the first power headroom.

In the foregoing method, the second apparatus receives a path loss parameter that is actually used by the first terminal and that is fed back by the first apparatus. In this case, the second apparatus may obtain a sensing capability of the first terminal.

According to a third aspect, this application provides a power control method. The power control method may be implemented through interaction between a first apparatus and a second apparatus. For example, the first apparatus is a terminal, and the second apparatus is a network device. The second apparatus sends first indication information to at least one first apparatus, where the first indication information indicates a path loss parameter of the at least one first apparatus. Correspondingly, the first apparatus receives the first indication information. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to the second apparatus through an environmental scatterer. The first apparatus sends second indication information to the second apparatus, where the second indication information indicates first power headroom of the first terminal. Correspondingly, the second apparatus receives the second indication information. The first power headroom is a difference between maximum transmit power of the first terminal and transmit power of the first signal, and the transmit power of the first signal is determined based on a path loss parameter of the first terminal.

Optionally, for another implementation of the power control method, refer to the corresponding descriptions in the first aspect and the second aspect. Details are not described herein again.

According to a fourth aspect, this application provides a communication apparatus. The communication apparatus may be a terminal, or may be an apparatus of a terminal, or is an apparatus that can be used in cooperation with a terminal. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to receive first indication information from a second apparatus, where the first indication information indicates a path loss parameter of at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to the second apparatus through an environmental scatterer. The communication unit is further configured to send second indication information to the second apparatus, where the second indication information indicates first power headroom of the first terminal, the first power headroom is a difference between maximum transmit power of the first terminal and transmit power of the first signal, and the transmit power of the first signal is determined based on a path loss parameter of the first terminal.

In a possible implementation, the path through which the first signal passes includes one path or a plurality of paths for the first terminal; and the first indication information indicates a path loss parameter of the path for the first terminal, or the first indication information indicates a plurality of path loss parameters respectively corresponding to the plurality of paths for the first terminal.

In a possible implementation, the plurality of path loss parameters respectively corresponding to the plurality of paths include a path loss reference value and a plurality of correlation values. The processing unit is further configured to perform a first operation on the path loss reference value and the plurality of correlation values, to determine the plurality of path loss parameters of the first terminal.

In a possible implementation, the processing unit is further configured to determine a largest value in the plurality of path loss parameters respectively corresponding to the plurality of paths for the first terminal. The processing unit is further configured to determine, based on the largest value in the path loss parameters, transmit power at which the first terminal sends the first signal.

In a possible implementation, the processing unit is further configured to determine, based on an identifier of the first terminal, a path loss parameter that is in the first indication information and that is associated with the identifier of the first terminal. Alternatively, the processing unit is further configured to determine, based on location information of the first terminal, a path loss parameter that is in the first indication information and that is associated with the location information of the first terminal.

In a possible implementation, the first path loss value is determined based on location information of the first terminal, location information of the environmental scatterer, an area of a radar cross section of the environmental scatterer, and a carrier frequency of the first signal; and the first path loss variation value is a difference between a first measurement value and the first path loss value, where the first measurement value is a path loss value that is determined based on the location information of the first terminal and that is of a line-of-sight path for a reference signal.

In a possible implementation, the second indication information further indicates a path loss parameter used by the first apparatus to determine the first power headroom.

According to a fifth aspect, this application provides a communication apparatus. The communication apparatus may be a network device, or may be an apparatus of a network device, or may be an apparatus that can be used in cooperation with a network device. In a possible implementation, the communication apparatus may include a functional module. The functional module may be implemented by a hardware circuit, software, or a combination of a hardware circuit and software.

In a possible implementation, the communication apparatus includes a communication unit and a processing unit. The communication unit is configured to send first indication information to at least one first apparatus, where the first indication information indicates a path loss parameter of the at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to a second apparatus through an environmental scatterer. The communication unit is further configured to receive second indication information from the first apparatus, where the second indication information indicates first power headroom of the first terminal, the first power headroom is a difference between maximum transmit power of the first terminal and transmit power of the first signal, and the transmit power of the first signal is determined based on a path loss parameter of the first terminal.

In a possible implementation, the path through which the first signal passes includes one path or a plurality of paths for the first terminal; and the first indication information indicates a path loss parameter of the path for the first terminal, or the first indication information indicates a plurality of path loss parameters respectively corresponding to the plurality of paths for the first terminal.

In a possible implementation, the plurality of path loss parameters respectively corresponding to the plurality of paths include a path loss reference value and a plurality of correlation values, and the path loss reference value and the plurality of correlation values are used by the first apparatus to determine, based on a first operation, the plurality of path loss parameters of the first terminal.

In a possible implementation, the first path loss value is determined based on location information of the first terminal, location information of the environmental scatterer, an area of a radar cross section of the environmental scatterer, and a carrier frequency of the first signal; and the first path loss variation value is a difference between a first measurement value and the first path loss value, where the first measurement value is a path loss value that is determined based on the location information of the first terminal and that is of a line-of-sight path for a reference signal.

In a possible implementation, the second indication information further indicates a path loss parameter used by the first apparatus to determine the first power headroom.

For the third aspect or the fourth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, the transceiver includes a transmitter and a receiver) of the communication apparatus, for example, implemented by using an antenna, a feeder, and a codec in the communication apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a sixth aspect, this application provides a communication apparatus, including a processor, configured to execute instructions. Optionally, the communication apparatus further includes a memory. The memory is configured to store the instructions. When the instructions are executed by the processor, the communication apparatus is caused to implement at least one of the following: the method according to any one of the first aspect and the possible implementations of the first aspect, and the method according to any one of the second aspect and the possible implementations of the second aspect. Optionally, the processor is coupled to the memory.

According to a seventh aspect, this application provides a computer-readable storage medium, where the computer-readable storage medium stores instructions. When the instructions are run on a computer, the computer is caused to perform at least one of the following: the method according to any one of the first aspect and the possible implementations of the first aspect, and the method according to any one of the second aspect and the possible implementations of the second aspect.

According to an eighth aspect, this application provides a chip system. The chip system includes a processor and an interface. Optionally, the chip system may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete device.

According to a ninth aspect, this application provides a computer program product, including instructions. When the instructions are run on a computer, the computer is caused to perform at least one of the following: the method according to any one of the first aspect and the possible implementations of the first aspect, and the method according to any one of the second aspect and the possible implementations of the second aspect.

According to a tenth aspect, this application provides a communication system, where the communication system includes at least one apparatus or device in the fourth aspect to the sixth aspect, so that the at least one apparatus or device performs at least one of the following: the method according to any one of the first aspect and the possible implementations of the first aspect, and the method according to any one of the second aspect and the possible implementations of the second aspect.

### BRIEF DESCRIPTION OF DRAWINGS

FIG. 1(a) to FIG. 1(f) are diagrams of sensing modes in a sensing scenario;
FIG. 2 is a diagram of power headroom;
FIG. 3 is a diagram of an architecture of a communication system according to this application;
FIG. 4 is a schematic flowchart of a power control method according to this application;
FIG. 5 is a diagram of locations of a network device, an environmental scatterer, and a first terminal according to this application;
FIG. 6 is a schematic flowchart of another power control method according to this application;
FIG. 7 is a diagram of a communication apparatus according to this application; and
FIG. 8 is a diagram of another communication apparatus according to this application.

### DESCRIPTION OF EMBODIMENTS

In this application, "/" may indicate an "or" relationship between associated objects. For example, A/B may indicate A or B. In addition, the term "and/or" may indicate that there are three relationships between the associated objects. For example, A and/or B may indicate the following three cases: Only A exists, both A and B exist, and only B exists, where A and B may be singular or plural. For ease of description of the technical solutions of this application, in this application, terms such as "first" and "second" may be used for distinguishing between technical features with a same function or similar functions. The terms such as "first" and "second" do not limit a quantity and an execution sequence, and the terms such as "first" and "second" do not limit a definite difference. In this application, the term "example", "for example", or the like is used to represent giving an example, an illustration, or a description, and any embodiment or design scheme described as an "example" or "for example" should not be construed as being more preferred or more advantageous than another embodiment or design scheme. Use of the term "example", "for example", or the like is intended to present a related concept in a specific manner for ease of understanding.

The following describes the technical solutions of this application with reference to the accompanying drawings in this application.
I. For ease of understanding, the following describes in detail definitions of related nouns in this application.
   1. Integrated sensing and communication (integrated sensing and communication, ISAC) technology: is a new type of information processing technology that combines a communication technology and a sensing technology. A core idea of the integrated sensing and communication technology is to newly add a sensing capability to a mobile communication network and construct capabilities of detecting, tracking, and imaging an environmental scatterer, so that a communication capability and the sensing capability are integrated into the same network. The ISAC technology can be used to implement functions such as high-precision positioning, environment sensing, sensing-assisted communication, and frequency utilization improvement. The environmental scatterer may be various tangible objects that can reflect an electromagnetic wave in an environment, for example, a ground object such as a mountain, a forest, or a building, and may further include a movable object such as a vehicle, an uncrewed aerial vehicle, a pedestrian, or a terminal device. Optionally, the environmental scatterer may also be referred to as a sensed target, a detected target, a sensed object, a detected object, a sensed device, or the like. This is not limited in this application.

A principle of communication is that a transmitting end modulates information on a radio wave and sends the radio wave to a receiving end, and the receiving end demodulates a signal carried on the radio wave to obtain the information. For example, a terminal sends an uplink signal to a network device. Correspondingly, the network device receives the uplink signal, and demodulates the uplink signal to obtain information included in the signal. A technical principle of sensing is that a transmitting end needs to send a radio wave in a specific direction. When the radio wave radiates to a surface of the environmental scatterer, a reflected wave is generated. Then, a receiving end may receive the reflected wave and process the reflected wave, to obtain information such as a location, a speed, and a type of the environmental scatterer. For example, a terminal sends an uplink signal to a network device. After the signal is radiated to a surface of a vehicle, a reflected wave is generated. The network device receives and processes the reflected wave, to obtain information such as a location and a speed of the vehicle.

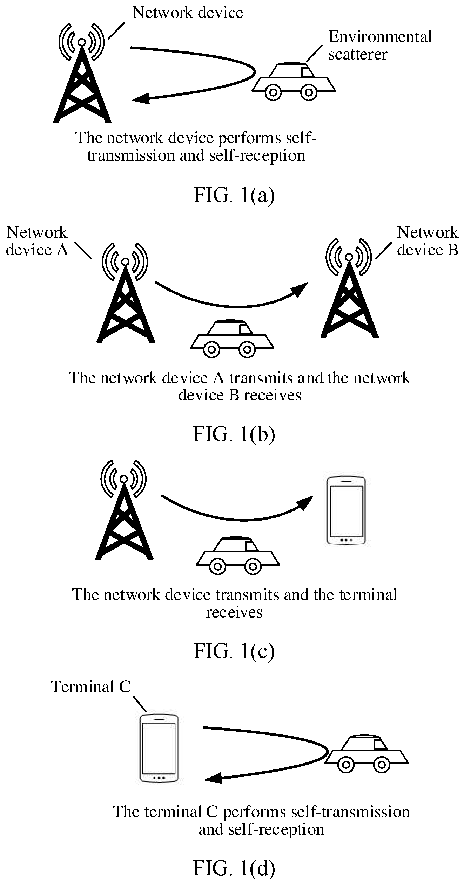

FIG. 1(a) to FIG. 1(f) are diagrams of sensing modes in a sensing scenario. As shown in FIG. 1(a) to FIG. 1(f), the sensing scenario includes six sub-scenarios: (a) a sub-scenario in which a network device performs self-transmission and self-reception; (b) a sub-scenario in which a network device A transmits and a network device B receives; (c) a sub-scenario in which a network device transmits and a terminal receives; (d) a sub-scenario in which a terminal C performs self-transmission and self-reception; (e) a sub-scenario in which a terminal A transmits and a network device receives; and (f) a sub-scenario in which a terminal A transmits and a terminal B receives. It may be understood that the sub-scenarios in FIG. 1(a) to FIG. 1(c) may be considered as downlink transmission scenarios in which a network device transmits a downlink signal, and the sub-scenarios in FIG. 1(d) to FIG. 1(f) may be considered as uplink transmission scenarios in which a terminal transmits an uplink signal.

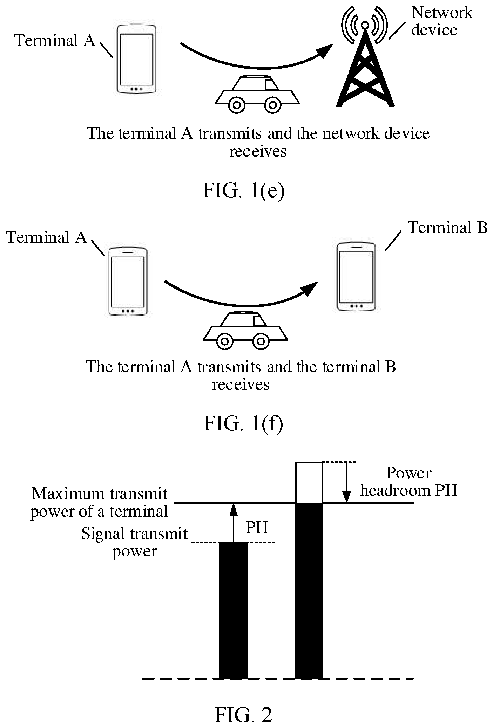

The sensing modes are classified into monostatic sensing and bistatic sensing. Monostatic sensing means that a transmitting end and a receiving end of a sensing signal are a same device. In a procedure for the sensing signal, such a sensing station needs to transmit the sensing signal, and also needs to receive a signal obtained by reflecting the sensing signal from a surface of an environmental scatterer. For example, as shown in the sub-scenario in FIG. 1(d), the terminal C transmits a sensing signal, a reflected signal is generated by reflecting the sensing signal from a surface of an environmental scatterer (for example, a vehicle), and then the terminal C receives the reflected signal. Therefore, the monostatic sensing mode is also referred to as a self-transmission/self-reception mode. Bistatic sensing means that a transmitting end and a receiving end of a sensing signal are two different devices. In a procedure for the sensing signal, after a sensing station A transmits the sensing signal, a reflected signal is generated by reflecting the sensing signal from a surface of an environmental scatterer, and a sensing station B receives the reflected signal. For example, as shown in the sub-scenario in FIG. 1(e) or the sub-scenario in FIG. 1(f), the terminal A transmits a sensing signal, a reflected signal is generated by reflecting the sensing signal from a surface of an environmental scatterer (for example, a vehicle), and the network device or the terminal B receives the reflected signal. Therefore, the bistatic sensing mode is also referred to as an A-transmit/B-receive mode. The communication method in this application is mainly applicable to the sub-scenarios in FIG. 1(d), FIG. 1(e), and FIG. 1(f).

2. Uplink power control: While ensuring transmission performance (including a rate, a bit error rate, a delay, and the like) of each terminal, a system throughput is maximized and terminal power consumption is minimized. The essence of uplink power control is to change transmit power of a terminal, adjust a quantity of resource blocks, and so on, so that the transmit power of the terminal can be appropriate and low, and a network device side can always obtain an appropriate signal-to-noise ratio in cases of different path losses, noise, and interference, thereby ensuring uplink demodulation performance.

Uplink power control is classified into open-loop power control and closed-loop power control. For open-loop power control, a terminal determines transmit power of the terminal by using an algorithm, and an input of the algorithm includes an internal setting of the terminal or measurement data of the terminal. For closed-loop power control, a network device sends a power control instruction to a terminal based on strength of a received signal, and the terminal performs power adjustment based on feedback information from the network device.

For example, it is assumed that the terminal sends a sounding reference signal (sounding reference signal, SRS) to the network device. For closed-loop power control, an uplink power control procedure may be as follows: The network device receives the SRS sent by the terminal, the network device configures, for the terminal, physical uplink shared channel (physical uplink shared channel, PUSCH) received power and power control parameter that are expected by the network device, and the terminal calculates transmit power based on a path loss that is obtained by the terminal through estimation, and determines final transmit power under a constraint of maximum transmit power.

For SRS power control, transmit power *P_{SRS,b,f,c}*(*i, qₛ, l*) of the SRS satisfies Formula (1): $\begin{matrix}{P}_{SRS , b , f , c} \left(i, {q}_{s}, l\right) = \\ min \left\{\begin{matrix}{P}_{CMAX , f , c} \left(i\right) \\ {P}_{OSRS , b , f , c} \left({q}_{s}\right) + 10 {log}_{10} \left({2}^{μ}{M}_{SRS , b , f , c}\left(i\right)\right) + {α}_{SRS , b , f , c} \left({q}_{s}\right) {PL}_{b , f , c} \left({q}_{d}\right) + {h}_{b , f , c \left(i, l\right)}\end{matrix}\right.\end{matrix}$

*c* represents that the terminal is in a serving cell *c*, *f* represents a carrier frequency of the terminal, *b* represents that the terminal is within an uplink bandwidth part (uplink bandwidth part, UL BWP) *b*, *i* represents an SRS transmission opportunity, and *l* represents a power control adjustment status index configured by using a higher layer. Corresponding to different closed-loop power control processes, *qₛ* represents an index identifier (identity document, ID) of a current SRS resource set. *P_{SRS,b,f,c}*(*i, qₛ, l*) represents signal transmit power, *P_{CMAX,f,c}(i)* represents maximum transmit power of the terminal, *P_{OSRS,b,f,c}(qₛ)* represents signal transmit power that the network device expects to receive, and *M_{SRS,b,f,c}*(*i*) represents a quantity of resource blocks (resource element, RB) of an SRS bandwidth at a moment of the transmission opportunity *i. α_{SRS,b,f,c}(qₛ)* represents a path loss compensation factor, which is a path loss compensation coefficient that is configured by using the higher layer and that is for uplink power control. *h*_{*b,f,c*(*i,l*)} represents a power adjustment amount, and *PL_{b,f,c}*(*q_{d}*) represents a downlink path loss obtained by the terminal through measurement based on an index *q_{d}* of a downlink reference signal.

3. Power headroom (power headroom, PH): The PH represents a difference between maximum transmit power of a terminal and signal transmit power. When the terminal performs uplink transmission, in addition to completing uplink power control at a physical layer, the terminal further needs to send, based on a power headroom report (power headroom report, PHR), the PH of the terminal to a network device. For example, FIG. 2 is a diagram of power headroom. The PH is illustrated in FIG. 2. The terminal reports PH based on media access control element (media access control element, MAC CE) information. A positive PH value indicates that in addition to power currently used for signal transmission, there is power left for the terminal to use. For example, assuming that the maximum transmit power of the terminal is 23 decibel (dB), and the signal transmit power is 15 dB, after the terminal sends a signal, remaining power is 8 dB (that is, the PH is 8 dB). A negative PH value indicates current signal transmit power that is obtained through calculation exceeds allowed maximum transmit power of the terminal. For example, if the maximum transmit power of the terminal is 23 dB, and the signal transmit power is 30 dB, the signal transmit power has exceeded the allowed maximum transmit power of the terminal, and the PH is -7 dB.

For example, power headroom *PH*_{*type*3*,b,f,c*}(*i, qₛ*) for an SRS satisfies Formula (2): ${PH}_{type 3 , b , f , c} \left(i, {q}_{s}\right) = {P}_{CMAX , f , c} \left(i\right) - \left\{\begin{matrix}{P}_{{O}_{SRS} , b , f , c} \left({q}_{s}\right) + 10 {log}_{10} \left({2}^{μ}{M}_{SRS , b , f , c}\left(i\right)\right) \\ + {α}_{SRS , b , f , c} \left({q}_{s}\right) {PL}_{b , f , c} \left({q}_{d}\right) + {h}_{b , f , c \left(i\right)}\end{matrix}\right\}$

For meanings of parameters in Formula (2), refer to corresponding descriptions of Formula (1). Details are not described herein again.

4. Path loss: The path loss may be obtained through calculation based on modification of an existing path loss formula defined in the 3rd generation partnership project (3rd generation partnership project, 3GPP). For example, a loss *PLₛ* in a path from a signal transmitting end to a signal receiving end satisfies Formula (3): ${PL}_{s} = PL \left({d}_{1}\right) + PL \left({d}_{2}\right) + 10 {log}_{10} \left(\frac{{λ}^{2}}{4 π}\right) - 10 {log}_{10} RCS$

*d*₁ represents a distance from the signal transmitting end to an environmental scatterer, and *d*₂ represents a distance from the environmental scatterer to the signal receiving end. *PL*(*d*₁) represents a loss in a path from the signal transmitting end to the environmental scatterer, and *PL*(*d*₂) represents a loss in a path from the environmental scatterer to the signal receiving end. *λ* represents a wavelength of a signal, and *RCS* represents an area of a radar cross section (radar cross section, RCS) of the environmental scatterer.

*PL*(*d*₁) and *PL*(*d*₂) satisfy Formula (4): $PL = 28 + 22 {log}_{10} d + 20 {log}_{10} f$

*PL* is *PL*(*d*₁) or *PL*(*d*₂)*. d* represents a distance, where the distance is determined based on location information of the signal transmitting end, location information of the environmental scatterer, or location information of the signal receiving end, *d* is *d*₁ or *d*₂, and *f* represents a carrier frequency of the signal transmitting end.

### II. The following describes the communication method provided in this application.

### 1. Communication system

The communication method provided in this application may be applied to a plurality of communication systems, for example, may be a 5G (or referred to as a new radio (new radio, NR)) communication system, or may be a transition system between an LTE communication system and the 5G communication system. The transition system may also be referred to as a 4.5G communication system, or certainly may be a future communication system, for example, a 6th generation (6th generation, 6G) system or even a 7th generation (7th generation, 7G) system. The network architecture and the service scenarios described in this application are intended to describe the technical solutions of this application more clearly, and do not constitute a limitation on the technical solutions provided in this application. A person of ordinary skill in the art may learn that, with the evolution of a communication network architecture and the emergence of a new service scenario, the technical solutions provided in this application are also applicable to similar technical problems.

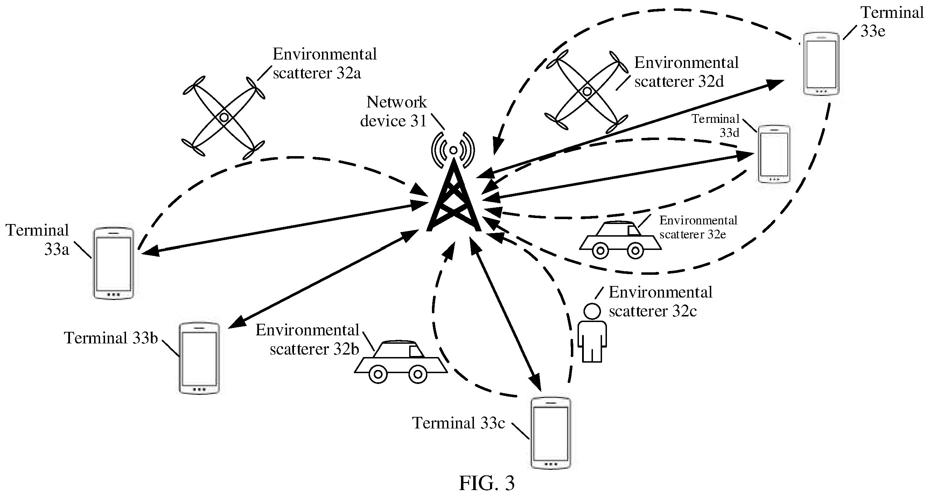

FIG. 3 is a diagram of an architecture of a communication system according to this application. The communication system may include a network device 31, at least one environmental scatterer (for example, 32a, 32b, 32c, 32d, and 32e in FIG. 3), and at least one terminal (for example, 33a, 33b, 33c, 33d, and 33e in FIG. 3). FIG. 1(a) to FIG. 1(f) are merely examples. The network device and the terminal in the communication system may alternatively be other devices. For example, the network device may be a wireless relay device, a wireless backhaul device, or the like, and the terminal may be an internet of things device, a surveillance camera, or the like.

The terminal is configured to send an uplink signal to the network device, or receive a downlink signal from the network device. The terminal may have radar sensing functions, for example, functions such as sending and receiving a signal, and processing a signal.

The terminal provided in this application may be a fixed device, a mobile device, a handheld device (for example, a mobile phone), a wearable device, a vehicle-mounted device, or a wireless apparatus (for example, a communication module, a modem, or a chip system) built in the foregoing device. The terminal includes but is not limited to: user equipment (user equipment, UE), a mobile station, a mobile terminal, or the like. The terminal may be widely used in various scenarios for communication, for example, scenarios such as an enhanced mobile broadband (enhanced mobile broadband, eMBB), ultra-reliable low-latency communication (ultra-reliable low-latency communication, URLLC), massive machine-type communications (massive machine-type communications, mMTC), cellular communication, device-to-device (device-to-device, D2D) communication, vehicle-to-everything (vehicle-to-everything, V2X) communication, machine-to-machine/machine-type (machine-to-machine/machine-type communication, M2M/MTC) communication, an internet of things (internet of things, IoT), virtual reality (virtual reality, VR), augmented reality (augmented reality, AR), industrial control (industrial control), and self-driving (self-driving), telemedicine (remote medical), a smart grid (smart grid), smart furniture, a smart office, smart wearable, smart transportation, a smart city (smart city), an uncrewed aerial vehicle, and a robot. For example, the terminal may be a mobile phone (for example, a mobile phone 33a, 33b, 33c, 33d, or 33e in FIG. 3), a handheld terminal in cellular communication, a communication device in D2D, an internet of things device in MTC, a surveillance camera in smart transportation and a smart city, or a communication device on an uncrewed aerial vehicle. The terminal may be referred to as a user terminal, a user apparatus, a subscriber unit, a subscriber station, a terminal, an access terminal, an access station, a UE station, a remote station, a mobile device, a wireless communication device, or the like. A specific technology and a specific device form that are used by the terminal are not limited in this application.

The network device 31 is configured to receive the uplink signal from the terminal, or send the downlink signal to the terminal. The network device 31 may have radar sensing functions, for example, functions such as sending and receiving a signal, and processing a signal.

The network device 31 provided in this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit-control plane (CU-control plane, CU-CP) module, or a central unit-user plane (CU-user plane, CU-UP) module.

The environmental scatterer (32a, 32b, 32c, 32d, or 32e in FIG. 3) may be an object without a communication function. As shown in FIG. 3, environmental scatterers may specifically include the environmental scatterer 32a, the environmental scatterer 32b, the environmental scatterer 32c, the environmental scatterer 32d, and the environmental scatterer 32e. The environmental scatterer includes but is not limited to: a vehicle, a low-altitude uncrewed aerial vehicle, a pedestrian, a tree, a building, an animal, and the like. For example, in a smart transportation scenario, the environmental scatterer may be a vehicle, a pedestrian, a tree along an edge of a road, an animal, or the like.

As shown in FIG. 3, for different quantities of terminals and different quantities of environmental scatterers, this application may include the following integrated sensing and communication scenarios:
(1) Scenario 1: Assuming that there are the network device 31, the environmental scatterer 32a, and the terminal 33a, a sensing path that may exist between the terminal 33a and the network device 31 is a path from the terminal 33a to the network device 31 through the environmental scatterer 32a.
(2) Scenario 2: Assuming that there are the network device 31, the environmental scatterer 32b, the environmental scatterer 32c, and the terminal 33c, there may be a plurality of sensing paths between the terminal 33c and the network device 31. For example, a plurality of sensing paths are formed from the terminal 33c to the network device 31 by passing through different environmental scatterers, for example, a path from the terminal 33c to the network device 31 through the environmental scatterer 32b, or a path from the terminal 33c to the network device 31 through the environmental scatterer 32c.
(3) Scenario 3: Assuming that there are the network device 31, the environmental scatterer 32d, the environmental scatterer 32e, the terminal 33d, and the terminal 33e, there may be a plurality of sensing paths between the terminals and the network device. For example, a plurality of sensing paths are formed from the terminal 33d to the network device 31 by passing through different environmental scatterers, for example, a path from the terminal 33d to the network device 31 through the environmental scatterer 32d, or a path from the terminal 33d to the network device 31 through the environmental scatterer 32e. A plurality of sensing paths are formed from the terminal 33e to the network device 31 by passing through different environmental scatterers, for example, a path from the terminal 33e to the network device 31 through the environmental scatterer 32d, or a path from the terminal 33e to the network device 31 through the environmental scatterer 32e.

Optionally, for a same environmental scatterer, an RCS used to calculate a path loss changes greatly with a movement of the environmental scatterer. For example, the RCS is greatly affected by an incident angle of a signal, a material of a reflection surface of an environmental scatterer, and the like, and there may be a plurality of sensing paths based on a same environmental scatterer.

For example, in the communication system shown in FIG. 3, the terminal may obtain, through measurement and by sending an SRS to the network device, a loss in a path from the terminal to the network device, so that the terminal performs path loss compensation for a unidirectional communication path (that is, from a transmitting end to a receiving end). However, impact of the environmental scatterer is not considered when the terminal calculates transmit power. In this case, for an integrated sensing and communication scenario, path loss compensation for a unidirectional communication path cannot meet a requirement for path loss compensation in a sensing scenario. In other words, the terminal cannot flexibly adjust signal transmit power based on a change in path loss information in the sensing scenario, causing problems that the transmit power and power headroom calculated by the terminal are inaccurate and sensing performance deteriorates. Therefore, this application provides a power control method, so that a terminal can adjust, in different sensing scenarios, signal transmit power based on path loss information indicated by a network device, thereby improving sensing performance of the terminal.

### 2. Communication method provided in this application

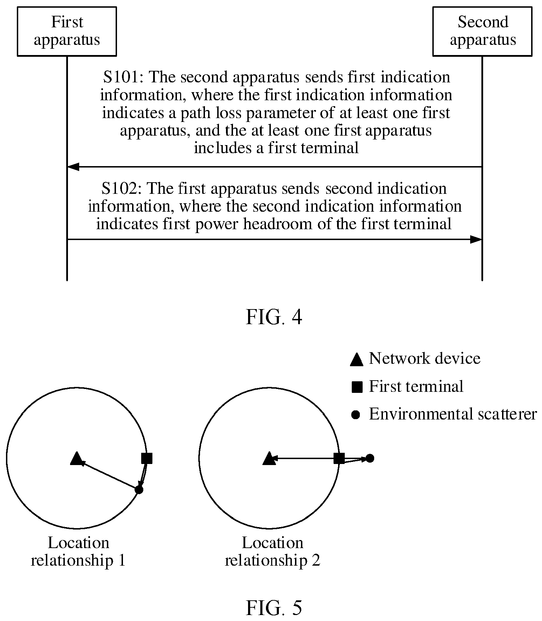

For example, FIG. 4 is a schematic flowchart of a power control method according to this application. The method may be implemented through interaction between a first apparatus and a second apparatus. For example, the first apparatus is a terminal, and the second apparatus is a network device. The method includes but is not limited to the following steps.

S101: The second apparatus sends first indication information. Correspondingly, the first apparatus receives the first indication information.

The first indication information indicates a path loss parameter of at least one first apparatus, and the at least one first apparatus includes a first terminal. For example, the first indication information may directly carry the path loss parameter of the at least one first apparatus, or indicate the path loss parameter of the at least one first apparatus based on different bit values.

The first indication information indicates a path loss parameter of the first terminal, and the path loss parameter of the first terminal includes at least one of a first path loss value of the first terminal or a first path loss variation value of the first terminal. For example, the first indication information indicates the first path loss value of the first terminal, or the first indication information indicates the first path loss variation value of the first terminal, or the first indication information indicates the first path loss value of the first terminal and the first path loss variation value of the first terminal.

Optionally, the first path loss value is determined based on location information of the first terminal, location information of an environmental scatterer, an area of a radar cross section of the environmental scatterer, and a carrier frequency of a first signal. For example, FIG. 5 is a diagram of locations of a network device, an environmental scatterer, and a first terminal according to this application. The network device may calculate a default path loss based on a current coverage range of a cell and an expected sensing range of the first terminal. Assuming that a distance between the first terminal and the network device is 500 meters, a distance between the environmental scatterer and the first terminal is *d*₁ (100 meters), and a distance between the environmental scatterer and the network device is *d*₂, the network device configures the expected sensing range of the first terminal as 100 meters. As shown in FIG. 5, according to Formula (3) and Formula (4), in this application, it is assumed that the network device calculates the first path loss value of the first terminal based on two location relationships:
(1) Location relationship 1: Assuming that the distance *d*₂ between the environmental scatterer and the network device is the same as the distance between the first terminal and the network device, that is, *d*₁ = 100 meters (*m*) and *d*₂ = 500 *m*, and assuming that *RCS =* 0.01 *m*² and *f* = 4.9 gigahertz (*GHz*)*,* a default path loss obtained through calculation according to Formula (3) and Formula (4) is 171.7 dB.
(2) Location relationship 2: Assuming that the first terminal, the environmental scatterer, and the network device are on a straight line, that is, *d*₁ = 100 *m* and *d*₂ = 600 *m*, a default path loss obtained through calculation according to Formula (3) and Formula (4) is 173.4 dB. For another example, assuming that *RCS* = 0.01 *m*² and *f* = 26 *GHz,* based on the foregoing calculation method, a default path loss for the location relationship 1 is 186.2 dB, and a default path loss for the location relationship 2 is 187.9 dB. Optionally, the network device detects the location information of the first terminal and the location information of the environmental scatterer, and substitutes obtained information into Formula (3) and Formula (4), so that the network device can determine a path loss configured for the first terminal.

Optionally, when the second apparatus does not obtain either the location information of the environmental scatterer or location information of the first terminal, the second apparatus sends a pre-determined default path loss to the first terminal. After the second apparatus detects the location information of the environmental scatterer and the location information of the first terminal, the second apparatus determines, based on the location information of the first terminal, the carrier frequency of the first signal, the location information of the environmental scatterer, and the area of the radar cross section of the environmental scatterer, a path loss parameter that is in the first indication information and that is configured for the first terminal. For example, the network device detects locations of the first terminal and the environmental scatterer. It is assumed that the distance *d*₁ from the first terminal to the environmental scatterer is 100 m, the distance *d*₂ from the environmental scatterer to the network device is 200 m, the area of the radar cross section of the environmental scatterer is *RCS* = 0.01 *m*², and the carrier frequency of the first terminal is *f =* 20*GHz.* In this case, the network device may determine, according to Formula (3) and Formula (4), the path loss parameter that needs to be configured for the first terminal.

The first path loss variation value is a difference between a first measurement value and the first path loss value. The first path loss value is determined by the second apparatus based on information such as the location information of the environmental scatterer and location information of the first apparatus. Optionally, the first measurement value may be a value that is of a loss in a path through which a reference signal directly arrives at the first apparatus and that is calculated by the second apparatus based on the location information of the first terminal. For example, a base station may calculate, based on the location information of the first terminal, a path loss value of a line-of-sight path (without passing through an environmental scatterer) through which the base station sends a reference signal (for example, a downlink reference signal preset by the base station and for measurement) to the first terminal, and determine the path loss value as the first measurement value. Optionally, the first measurement value may be indicated by the second apparatus to the first apparatus. For example, the base station may send the first measurement value to the first terminal, so that when calculating the first path loss value that needs to be compensated for, the first terminal determines the first path loss value based on the first measurement value and the first path loss variation value that are indicated by the base station.

The first path loss value or the first path loss variation value is used to compensate for a loss in a path for the first terminal to send the first signal. For example, the path loss parameter of the first terminal in the first indication information includes the first path loss value 2 dB of the first terminal, so that a loss that is indicated by the second apparatus to the first apparatus for compensation and that is in the path for the first terminal to send the first signal is 2 dB. Optionally, the first signal is at least one of a sounding reference signal, a signal sent on a physical uplink shared channel, a physical uplink control channel, and a physical random access channel, or a sensing signal.

Optionally, the first indication information may indicate a path loss value or a path loss value range.

For example, assuming that the first indication information indicates a path loss value, and the first indication information may include 8-bit information, there are 256 corresponding states in total, and each state directly corresponds to one path loss value, as shown in Table 1.

**Table 1 Correspondence between first indication information and a path loss value**

| Value | Meaning (Unit: dB) |
|---|---|
| 00000000 | A value of *PL* is 1 |
| 00000001 | A value of *PL* is 2 |
| 00000010 | A value of *PL* is 3 |
| ... | ... |
| 11111100 | A value of *PL* is 254 |
| 11111101 | A value of *PL* is 255 |
| 11111111 | A value of *PL* is 256 |

It should be noted that the correspondence in Table 1 is predefined, and there is no direct relationship between a value of the first indication information and the path loss value. In other words, the value 00000000 in a left column may correspond to any value of *PL.* The table merely shows a specific value as an example.

For another example, assuming that the first indication information indicates a path loss value range, that is, each state of the first indication information correspondingly indicates an indication range of a path loss value, and the first indication information may include 6-bit information, there are 64 corresponding states in total, and each state directly corresponds to a path loss value range, as shown in Table 2.

**Table 2 Correspondence between first indication information and a path loss value range**

| Value | Meaning (Unit: dB) |
|---|---|
| 000000 | *PL* <50 |
| 000001 | 50≤*PL*<52 |
| 000010 | 52≤*PL*<54 |
| ... | ... |
| 111100 | 170≤*PL*<172 |
| 111101 | 172≤*PL*<174 |
| 111111 | 174≤*PL* |

It should be noted that the correspondence in Table 2 is predefined, and there is no direct relationship between a value of the first indication information and an indication range of a path loss value. Optionally, when the first indication information sent by the second apparatus indicates the path loss value range, the first apparatus uses a median value of the range to calculate transmit power at which the first signal is sent. For example, if the path loss value range is greater than or equal to 52 dB and less than 54 dB, the median value of the range is 53 dB, and the first apparatus may use the median value 53 dB to calculate the transmit power at which the first signal is sent.

Optionally, the first indication information may indicate a path loss variation value or a path loss variation value range.

For example, assuming that the first indication information indicates a path loss variation value, and the first indication information may include 6-bit information, there are 64 corresponding states in total, and each state directly corresponds to one path loss variation value, as shown in Table 3.

**Table 3 Correspondence between first indication information and a path loss variation value**

| Value | Meaning (Unit: dB) |
|---|---|
| 000000 | A value of Δ*PL* is -31 |
| 000001 | A value of Δ*PL* is -30 |
| 000010 | A value of Δ*PL* is -29 |
| ... | ... |
| 111100 | A value of Δ*PL* is 30 |
| 111101 | A value of Δ*PL* is 31 |
| 111111 | A value of Δ*PL* is 32 |

It should be noted that the correspondence in Table 3 is predefined, and there is no direct relationship between a value of the first indication information and a value of the path loss variation value. In other words, the value 000000 in a left column may correspond to any value of Δ*PL.* The table merely shows a specific value as an example.

For example, assuming that the first indication information indicates a path loss variation value range, that is, each state of the first indication information correspondingly indicates an indication range of a path loss variation value, and the first indication information may include 6-bit information, there are 64 corresponding states in total, and each state directly corresponds to a path loss variation value range, as shown in Table 4.

**Table 4 Correspondence between first indication information and a path loss variation value range**

| Value | Meaning (Unit: dB) |
|---|---|
| 000000 | Δ*PL<-*31 |
| 000001 | -31≤Δ*PL*<-30 |
| 000010 | -30≤Δ*PL*<-29 |
| ... | ... |
| 111100 | 29≤Δ*PL*<30 |
| 111101 | 30≤Δ*PL*<31 |
| 111111 | 31≤Δ*PL* |

It should be noted that the correspondence in Table 4 is predefined, and there is no direct relationship between a value of the first indication information and an indication range of a path loss variation value. Optionally, when the first indication information sent by the second apparatus indicates the path loss variation value range, the first apparatus uses a median value of the range to calculate transmit power at which the first signal is sent. For example, if the path loss variation value range is greater than or equal to -31 dB and less than -30 dB, the median value of the range is -30.5 dB, so that the first apparatus may use the median value -30.5 dB to calculate the transmit power at which the first signal is sent.

Optionally, the first indication information may be carried in at least one of radio resource control (radio resource control, RRC), downlink control information (downlink control information, DCI), or MAC CE information.

The path through which the first signal passes includes a path from the first terminal to the second apparatus through the environmental scatterer. For example, when the power control method provided in this application is applied to the sub-scenario in FIG. 1(d) or the sub-scenario in FIG. 1(f), a path through which the first signal sent by the first apparatus (for example, the terminal C in the sub-scenario in FIG. 1(d) or the terminal A in the sub-scenario in FIG. 1(f)) passes includes a path from the terminal C to the terminal C through an environmental scatterer, or a path from the terminal A to the terminal B through an environmental scatterer. For another example, when the power control method provided in this application is applied to a bistatic sensing scenario that is illustrated in the sub-scenario in FIG. 1(e) and in which sending is performed by the terminal A and receiving is performed by the network device, a path through which the first signal sent by the first apparatus (for example, the terminal A in the sub-scenario in FIG. 1(e)) passes includes a path from the terminal A to the network device through an environmental scatterer.

Optionally, the path through which the first signal passes includes one path or a plurality of paths for the first terminal. For example, assuming that the second apparatus receives an uplink signal sent by the first terminal, the uplink signal passes through an environmental scatterer 1, and the uplink signal is reflected by the environmental scatterer 1 and transmitted to the second apparatus through one path, the path through which the first terminal sends the first signal is from the first terminal to the second apparatus through the environmental scatterer 1, and the first indication information indicates a path loss parameter of the path.

Optionally, the first indication information indicates a plurality of path loss parameters respectively corresponding to the plurality of paths for the first terminal, and the plurality of paths for the first terminal include a plurality of paths from the first terminal to the second apparatus through a plurality of environmental scatterers. For example, assuming that the second apparatus receives an uplink signal sent by the first terminal, the uplink signal passes through an environmental scatterer 1 and an environmental scatterer 2, and the uplink signal is reflected by the environmental scatterer 1 and the environmental scatterer 2 and transmitted to the second apparatus through two paths, the two paths through which the first terminal sends the first signal are respectively from the first terminal to the second apparatus through the environmental scatterer 1 and from the first terminal to the second apparatus through the environmental scatterer 2, and the first indication information indicates path loss parameters respectively corresponding to the two paths.

Optionally, the plurality of paths for the first terminal include a plurality of paths from the first terminal to the second apparatus through a first environmental scatterer. For example, assuming that the first environmental scatterer is a low-altitude uncrewed aerial vehicle or a vehicle, the path through which the first terminal sends the first signal is from the first terminal to the second apparatus through the low-altitude uncrewed aerial vehicle or the vehicle. An RCS used for calculation of a path loss value continuously changes due to a movement of the low-altitude uncrewed aerial vehicle, or changes due to vehicle front scattering or vehicle rear scattering of the vehicle, or the like. Therefore, there are different loss values for paths through the first environmental scatterer, and therefore, there are a plurality of paths from the first terminal to the second apparatus through the first environmental scatterer. Correspondingly, the first indication information indicates path loss parameters respectively corresponding to the plurality of paths.

Optionally, it is assumed that the at least one first apparatus includes the first terminal and a second terminal, and the first indication information indicates a path loss parameter of the first terminal and a path loss parameter of the second terminal. The path loss parameter of the first terminal includes at least one of the first path loss value of the first terminal or the first path loss variation value of the first terminal. The path loss parameter of the second terminal includes at least one of a second path loss value of the second terminal or a second path loss variation value of the second terminal. For example, the second apparatus sends first indication information to the first terminal and the second terminal, where the first indication information includes the first path loss value 15 dB of the first terminal and the second path loss value 10 dB of the second terminal, so that the second apparatus indicates, to the first terminal and the second terminal for compensation, losses in paths respectively for the first terminal to send the first signal and for the second terminal to send the first signal. Optionally, for a specific implementation of the path loss parameter of the second terminal, refer to the descriptions of the path loss parameter of the first terminal. Details are not described herein again.

S102: The first apparatus sends second indication information. Correspondingly, the second apparatus receives the second indication information.

The second indication information indicates first power headroom of the first terminal. The second indication information may directly carry the power headroom of the first terminal. For example, the second indication information includes the first power headroom of the first terminal. Alternatively, the second indication information indicates the power headroom of the first terminal based on different bit values, so that the first apparatus indicates, to the second apparatus, remaining power of the first apparatus.

The first power headroom is a difference between maximum transmit power of the first terminal and transmit power of the first signal. For example, it is assumed that the maximum transmit power of the first terminal is 30 dB, and it is assumed that the transmit power that is of the first signal and that is calculated by the first apparatus is 12 dB. In this case, the first apparatus may determine that the first power headroom of the first terminal is 18 dB.

The transmit power of the first signal is determined based on the path loss parameter of the first terminal. The path loss parameter of the first terminal is at least one of the first path loss value of the first terminal or the first path loss variation value of the first terminal.
(1) Case 1: When the path loss parameter of the first terminal is the first path loss value of the first terminal, the transmit power *P_{SRS,b,f,c}*(*i, qₛ, l*) of the first signal satisfies Formula (5): $\begin{matrix}{P}_{SRS , b , f , c} \left(i, {q}_{s}, l\right) = \\ min \left\{\begin{matrix}{P}_{CMAX , f , c} \left(i\right) \\ {P}_{OSRS , b , f , c} \left({q}_{s}\right) + 10 {log}_{10} \left({2}^{μ}{M}_{SRS , b , f , c}\left(i\right)\right) + {α}_{SRS , b , f , c} \left({q}_{s}\right) {PL}_{b , f , c} + {h}_{b , f , c \left(i\right)}\end{matrix}\right.\end{matrix}$

*P_{OSRS,b,f,c}(qₛ)* represents transmit power that is of the first signal and that the second apparatus expects to receive, and *PL_{b,f,c}* represents the first path loss value. For specific meanings of other parameters in Formula (5), refer to the foregoing corresponding descriptions of Formula (1). Details are not described herein again.

The first power headroom may be determined according to Formula (5). For example, the first power headroom *PH*_{*type*3*,b,f,c*}(*i, qₛ*) satisfies Formula (6): ${PH}_{type 3 , b , f , c} \left(i, {q}_{s}\right) = {P}_{CMAX , f , c} \left(i\right) - \left\{\begin{matrix}{P}_{{O}_{SRS} , b , f , c} \left({q}_{s}\right) + 10 {log}_{10} \left({2}^{μ}{M}_{SRS , b , f , c}\left(i\right)\right) \\ + {α}_{SRS , b , f , c} \left({q}_{s}\right) {PL}_{b , f , c} + {h}_{b , f , c \left(i\right)}\end{matrix}\right\}$

*PH*_{*type*3*,b,f,c*}(*i, qₛ*) represents the first power headroom of the first terminal. For specific meanings of other parameters in Formula (6), refer to the foregoing corresponding descriptions of Formula (1) and Formula (5). Details are not described herein again.

(2) Case 2: When the path loss parameter of the first terminal is the first path loss variation value of the first terminal, the transmit power *P_{SRS,b,f,c}*(*i, qₛ, l*) of the first signal satisfies Formula (7): $\begin{matrix}{P}_{SRS , b , f , c} \left(i, {q}_{s}, l\right) = \\ min \left\{\begin{matrix}{P}_{CMAX , f , c} \left(i\right) \\ {P}_{OSRS , b , f , c} \left({q}_{s}\right) + 10 {log}_{10} \left({2}^{μ}{M}_{SRS , b , f , c}\left(i\right)\right) + {α}_{SRS , b , f , c} \left({q}_{s}\right) \left({PL}_{b , f , c}\left({q}_{d}\right)+ΔPL\right) + {h}_{b , f , c \left(i\right)}\end{matrix}\right.\end{matrix}$

Δ*PL* represents the first path loss variation value. For specific meanings of other parameters in Formula (7), refer to the foregoing corresponding descriptions of Formula (1). Details are not described herein again.

The first power headroom may be determined according to Formula (7). For example, the first power headroom *PH*_{*type*3*,b,f,c*}(*i, qₛ*) satisfies Formula (8): ${PH}_{type 3 , b , f , c} \left(i, {q}_{s}\right) = {P}_{CMAX , f , c} \left(i\right) - \left\{\begin{matrix}{P}_{{O}_{SRS} , b , f , c} \left({q}_{s}\right) + 10 {log}_{10} \left({2}^{μ}{M}_{SRS , b , f , c}\left(i\right)\right) \\ + {α}_{SRS , b , f , c} \left({q}_{s}\right) \left({PL}_{b , f , c}\left({q}_{d}\right)+ΔPL\right) + {h}_{b , f , c \left(i\right)}\end{matrix}\right\}$

*PH*_{*type*3*,b,f,c*}(*i, qₛ*) represents the first power headroom of the first terminal. For specific meanings of other parameters in Formula (8), refer to the foregoing corresponding descriptions of Formula (1) and Formula (7). Details are not described herein again.

(3) Case 3: When the path loss parameter of the first terminal is the first path loss value of the first terminal and the first path loss variation value of the first terminal, the transmit power *P_{SRS,b,f,c}*(*i, qₛ, l*) of the first signal satisfies Formula (9): $\begin{matrix}{P}_{SRS , b , f , c} \left(i, {q}_{s}, l\right) = \\ min \left\{\begin{matrix}{P}_{CMAX , f , c} \left(i\right) \\ {P}_{OSRS , b , f , c} \left({q}_{s}\right) + 10 {log}_{10} \left({2}^{μ}{M}_{SRS , b , f , c}\left(i\right)\right) + {α}_{SRS , b , f , c} \left({q}_{s}\right) \left({PL}_{b , f , c}+ΔPL\right) + {h}_{b , f , c \left(i\right)}\end{matrix}\right.\end{matrix}$

For specific meanings of the parameters in Formula (9), refer to the foregoing corresponding descriptions of Formula (1). Details are not described herein again.

The first power headroom may be determined according to Formula (9). For example, the first power headroom *PH*_{*type*3*,b,f,c*}(*i, qₛ*) satisfies Formula (10): ${PH}_{type 3 , b , f , c} \left(i, {q}_{s}\right) = {P}_{CMAX , f , c} \left(i\right) - \left\{\begin{matrix}{P}_{{O}_{SRS} , b , f , c} \left({q}_{s}\right) + 10 {log}_{10} \left({2}^{μ}{M}_{SRS , b , f , c}\left(i\right)\right) \\ + {α}_{SRS , b , f , c} \left({q}_{s}\right) \left({PL}_{b , f , c}+ΔPL\right) + {h}_{b , f , c \left(i\right)}\end{matrix}\right\}$

For specific meanings of the parameters in Formula (10), refer to the foregoing corresponding descriptions of Formula (1) and Formula (7). Details are not described herein again.

Optionally, the first indication information may further include the transmit power that is of the first signal and that the second apparatus expects to receive, a quantity of RBs of an SRS bandwidth, a path loss compensation factor, a power adjustment amount, or an index *q_{d}* of the reference signal. Alternatively, the foregoing parameters may be pre-configured by the first apparatus. For example, the first apparatus receives the first indication information from the second apparatus, the first apparatus determines the transmit power of the first signal based on at least one of the first path loss value or the first path loss variation value, the transmit power that is of the first signal and that the second apparatus expects to receive, the quantity of RBs of the SRS bandwidth, the path loss compensation factor, and the power adjustment amount that are in the first indication information, and the first apparatus determines final transmit power of the first signal when the transmit power of the first signal is lower than or equal to the maximum transmit power of the first terminal. Alternatively, for example, the first apparatus receives the first indication information, and the first apparatus determines, based on at least one of the first path loss value or the first path loss variation value in the first indication information and the parameters pre-configured by the first terminal, the transmit power at which the first terminal sends the first signal.

Optionally, the second indication information further indicates a path loss parameter used by the first apparatus to determine power headroom. For example, it is assumed that the first indication information indicates a plurality of path loss values of the first terminal. Correspondingly, the first apparatus receives the plurality of path loss values, and may separately calculate a plurality of pieces of transmit power and a plurality of pieces of power headroom based on the plurality of path loss values, to determine transmit power at which the first terminal sends the first signal and corresponding power headroom. The second indication information may further indicate the path loss parameter corresponding to the power headroom. For example, the second indication information includes a first field, and the first field indicates the path loss parameter used by the first apparatus to determine the power headroom. It is assumed that the first field includes 2-bit information. It is assumed that the plurality of path loss values of the first terminal include a 1^{st} *PL* of 12 dB, a 2^{nd} *PL* of 8 dB, a 3^{rd} *PL* of 10 dB, and a 4^{th} *PL* of 6 dB. Assuming that the first apparatus determines, based on the 1^{st} *PL* (12 dB), the transmit power at which the first terminal sends the first signal and the first power headroom, the first apparatus sends the second indication information to the second apparatus, where a value of the first field in the second indication information is 00, which indicates that a path loss value used by the first apparatus to determine the first power headroom is the 1^{st} *PL* (12 dB). Specific bit information values and meanings are shown in Table 5.

**Table 5 Correspondence between a first field in second indication information and a path loss value**

| Value | Meaning (Unit: dB) |
|---|---|
| 00 | Feed back based on a 1^{st} *PL* |
| 01 | Feed back based on a 2^{nd} *PL* |
| 10 | Feed back based on a 3^{rd} *PL* |
| 11 | Feed back based on a 4^{th} *PL* |

It should be noted that the correspondence in Table 5 is predefined, and there is no direct relationship between the value of the first field in the second indication information and the path loss value. The table merely shows an example.

Optionally, if the first power headroom calculated by the first apparatus is a negative value, it indicates that the transmit power determined by the first apparatus according to Formula (5) or Formula (7) has exceeded the maximum transmit power of the first terminal. In this case, the first apparatus may reselect another path loss parameter from the plurality of path loss parameters of the first terminal, to calculate a transmit power of the first signal and corresponding power headroom. For example, the first apparatus sequentially selects, in descending order, another path loss parameter less than a largest value, or selects an average value of the plurality of path loss parameters to calculate the transmit power of the first signal. For example, it is assumed that the plurality of path loss parameters of the first terminal include 6 dB, 11 dB, 13 dB, and 18 dB. If the first power headroom obtained by the first apparatus by calculating the transmit power of the first signal based on the largest value (18 dB) in the plurality of path loss parameters is a negative value, the first apparatus may select a second-largest value (13 dB) other than the largest value (18 dB) or an average value (12 dB), to calculate the transmit power of the first signal and the first power headroom. Optionally, if both the first power headroom calculated by the first apparatus by using the second-largest value (13 dB) and the first power headroom calculated by the first apparatus by using the average value (12 dB) are negative values, the first apparatus may sequentially select, in descending order, another path loss parameter that is less than the second-largest value and less than the average value (first select 11 dB, and then select 6 dB), to calculate the transmit power of the first signal and the first power headroom, until the first power headroom is a positive value.

In this embodiment, the first apparatus may receive the first indication information, to obtain path loss information used to calculate the transmit power at which the first signal (for example, an uplink signal used for sensing) is sent, so that the first apparatus calculates the transmit power and/or the power headroom more accurately. This helps the first apparatus flexibly adjust the signal transmit power based on a change in path loss information in a sensing scenario, so that a requirement on transmit power of a sensing signal is met, thereby improving sensing performance.

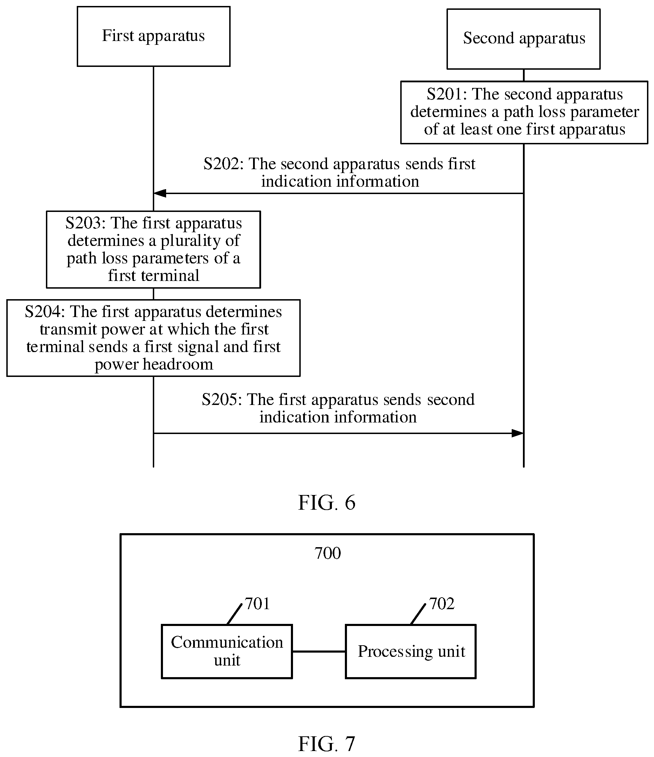

For example, FIG. 6 is a schematic flowchart of another power control method according to this application. The method may be implemented through interaction between a first apparatus and a second apparatus. For example, the first apparatus is a terminal, and the second apparatus is a network device. The method includes but is not limited to the following steps.

S201: The second apparatus determines a path loss parameter of at least one first apparatus.

For example, the at least one first apparatus includes a first terminal and a second terminal, and the path loss parameter of the at least one apparatus includes a path loss parameter of the first terminal and a path loss parameter of the second terminal.

For a specific implementation of S201, refer to the related descriptions of S101 in the foregoing embodiment. For example, the second apparatus determines, based on location information of the first terminal, a carrier frequency of a first signal, location information of an environmental scatterer, and an area of a radar cross section of the environmental scatterer, a path loss parameter that is in first indication information and that is configured for the first terminal. Details are not described herein again.

S202: The second apparatus sends the first indication information. Correspondingly, the first apparatus receives the first indication information.

For a specific implementation of S202, refer to the related descriptions of S101 in the foregoing embodiment. For example, the second apparatus sends the first indication information to the first apparatus, and the second apparatus indicates, to the first apparatus for compensation, a loss in a path for sending the first signal. Details are not described herein again.

S203: The first apparatus determines a plurality of path loss parameters of the first terminal.

The first indication information indicates the plurality of path loss parameters respectively corresponding to a plurality of paths for the first terminal, and the plurality of path loss parameters include a path loss reference value and a plurality of correlation values. For example, it is assumed that the first indication information includes a plurality of fields, a first field in the plurality of fields indicates the path loss reference value, and other fields in the plurality of fields respectively indicate a correlation value between a remaining path loss value and the path loss reference value.

Optionally, the path loss reference value is a largest value or an average value in the plurality of path loss parameters. For example, the plurality of path loss parameters, respectively corresponding to the plurality of paths for the first terminal, that are indicated by the second apparatus and that are received by the first apparatus are 6 dB, 11 dB, 13 dB, and 18 dB, and the path loss reference value indicated by the first field is a largest value (18 dB) in the path loss parameters or an average value (12 dB) of the path loss parameters. For a specific method for obtaining a value of the path loss reference value, refer to the related descriptions of Table 1, Table 2, Table 3, or Table 4 in S101 in the foregoing embodiment. Details are not described herein again.

For example, it is assumed that the path loss reference value is a largest value, each field in the first indication information may include 3-bit information, and a quantity of the plurality of fields in the first indication information is assumed to be 4 (the first field, a second field, a third field, and a fourth field). The first field indicates the path loss reference value, and specific bit values and meanings of other fields (for example, the second field, the third field, and the fourth field) are shown in Table 6.

**Table 6 Correspondence between other fields and related values**

| Value | Meaning (Unit: dB) |
|---|---|
| 000 | A difference of 0 dB to 2 dB from a largest *PL* |
| 001 | A difference of 2 dB to 4 dB from a largest *PL* |
| 010 | A difference of 4 dB to 6 dB from a largest *PL* |
| ... | ... |
| 100 | A difference of 10 dB to 12 dB from a largest *PL* |
| 101 | A difference of 12 dB to 14 dB from a largest *PL* |
| 111 | A difference of 14 dB to 16 dB from a largest *PL* |

It should be noted that the correspondence in Table 6 is predefined, and there is no direct relationship between a value of a field in the first indication information other than the first field and a correlation value. The table merely shows an example.

Optionally, a correlation value may be a fixed value, and it is assumed that a first operation is an addition operation or a subtraction operation (or a similar variation of the addition operation or the subtraction operation). A plurality of path loss values may be obtained by adding a plurality of fixed values to the path loss reference value or by subtracting a plurality of fixed values from the path loss reference value. For example, assuming that the first operation is subtracting a plurality of correlation values from the path loss reference value, the path loss reference value indicated by the first field is 18 dB, and correlation values indicated by other fields are 1 dB, 5 dB, and 8 dB (that is, the fixed values are 1 dB, 5 dB, and 8 dB), the first apparatus may determine, based on the first operation, that the plurality of path loss parameters of the first terminal are 18 dB, 17 dB, 13 dB, and 10 dB.

Optionally, a correlation value is a proportional coefficient, and it is assumed that the first operation is a multiplication operation or a division operation (or a similar variation of the multiplication operation or the division operation). A plurality of path loss values may be obtained by respectively multiplying the path loss reference value by a plurality of proportional coefficients or by respectively dividing the path loss reference value by a plurality of proportional coefficients. For example, assuming that the first operation is multiplying the path loss reference value by a plurality of correlation values, the path loss reference value indicated by the first field is 18 dB, and correlation values indicated by other fields are 0.9, 0.6, and 0.4 (that is, the proportional coefficients are 0.9, 0.6, and 0.4), the first apparatus may determine, based on the first operation, that the plurality of path loss parameters of the first terminal are 18 dB, 16.2 dB, 10.8 dB, and 7.2 dB.

Optionally, a specific implementation in which the first apparatus determines, from the first indication information, a path loss parameter associated with the first terminal may include the following cases:
Case 1: If there are a plurality of first apparatuses, and the first indication information indicates a plurality of path loss parameters, the first apparatus determines, based on an identifier of the first terminal, a path loss parameter that is in the first indication information and that is associated with the identifier of the first terminal. Optionally, the first indication information may further include the identifier of the first terminal, and the first apparatus may determine, based on the identifier, the path loss parameter that is in the first indication information and that is associated with the identifier of the first terminal.

For example, it is assumed that the first apparatus includes the first terminal and the second terminal, paths through which the first terminal sends the first signal include a path 1 and a path 2, and paths through which the second terminal sends the first signal include a path 3 and a path 4. For the path 1 and the path 2, the first terminal receives the first indication information from the second apparatus, where two path loss parameters that are carried in the first indication information and that respectively correspond to the path 1 and the path 2 are associated with the identifier of the first terminal, so that after receiving the first indication information, the first terminal may compare an identifier of the first terminal with the identifier that is included in the first indication information and that is of the first terminal. If the identifier of the first terminal is consistent with the identifier that is included in the first indication information and that is of the first terminal, the first terminal determines the path loss parameters that are in the first indication information and that are associated with the identifier of the first terminal. Optionally, for the path 3 and the path 4, the second terminal receives the first indication information from the second apparatus, where two path loss parameters that are carried in the first indication information and that respectively correspond to the path 3 and the path 4 are associated with an identifier of the second terminal, so that after receiving the first indication information, the second terminal may compare an identifier of the second terminal with the identifier that is included in the first indication information and that is of the second terminal. If the identifier of the second terminal is consistent with the identifier that is included in the first indication information and that is of the second terminal, the second terminal determines path loss parameters that are in the first indication information and that are associated with the identifier of the second terminal.

Optionally, the first indication information is scrambled by using the identifier of the first terminal. If the first apparatus can descramble the first indication information based on the identifier, it indicates that the first indication information includes the path loss parameter associated with the identifier of the first terminal. Optionally, the first indication information is scrambled by using the identifier of the first terminal, for example, may be scrambled by using a radio network temporary identifier (radio network temporary identifier, RNTI). For example, based on the foregoing assumed information, the second apparatus scrambles, by using the identifier of the first terminal, a message (for example, an RRC message or a DCI message) that carries the first indication information. After the first apparatus receives the first indication information, assuming that the first apparatus may descramble, based on the identifier of the first terminal, the message that carries the first indication information, to obtain the path loss parameter carried in the first indication information, the first apparatus may determine a path loss parameter corresponding to the first terminal. Case 2: If there are a plurality of first apparatuses, and the first indication information indicates a plurality of path loss parameters, the first apparatus determines, based on the location information of the first terminal, a path loss parameter that is in the first indication information and that is associated with the location information of the first terminal.

Optionally, the first indication information may further include the location information of the first apparatus, and the first apparatus may determine, based on the location information, the path loss parameter that is in the first indication information and that is associated with the location information of the first terminal.

For example, the second apparatus may determine the path loss parameter of the first terminal based on the location information of the first apparatus and another related parameter, and the location information of the first terminal may be associated with a path loss parameter corresponding to the first terminal. For example, assuming that the first apparatus includes the first terminal and the second terminal, two path loss parameters that are carried in the first indication information and that respectively correspond to a path 1 and a path 2 are associated with the location information of the first terminal, and two path loss parameters that are carried in the first indication information and that respectively corresponding to a path 3 and a path 4 are associated with location information of the second terminal. After receiving the first indication information, the first terminal and the second terminal may compare the location information of the first terminal and the second terminal with location information that is in the first indication information and that is of terminals. If the location information of the first terminal and the second terminal is consistent with the location information that is in the first indication information and that is of the terminals, the first terminal determines the path loss parameters that are in the first indication information and that are associated with the location information of the first terminal, and the second terminal determines the path loss parameters that are in the first indication information and that are associated with the location information of the second terminal.

Optionally, a specific implementation for a path loss parameter used by the first apparatus to determine first power headroom may include the following: If there are one or more first apparatuses, and the first indication information indicates a plurality of path loss parameters, the first apparatus determines that a largest value in the plurality of path loss parameters associated with the first terminal is the path loss parameter used by the first apparatus to determine the first power headroom. For example, the first apparatus receives the first indication information from the second apparatus. It is assumed that the plurality of path loss parameters that are carried in the first indication information and that are associated with the first terminal are 12 dB, 8 dB, 10 dB, and 6 dB. In this case, the first apparatus may determine that a largest value in the path loss parameters is 12 dB, that is, the path loss parameter used by the first apparatus to determine the first power headroom is 12 dB.

S204: The first apparatus determines transmit power at which the first terminal sends the first signal and the first power headroom.

For a specific implementation of S204, refer to the related descriptions of S102 in the foregoing embodiment. For example, transmit power of the first signal is determined based on the path loss parameter of the first terminal, the transmit power *P_{SRS,b,f,c}*(*i, qₛ, l*) of the first signal satisfies Formula (5) or Formula (7), and the first power headroom satisfies Formula (6) or Formula (8). Details are not described herein again.

S205: The first apparatus sends second indication information. Correspondingly, the second apparatus receives the second indication information.

For a specific implementation of S205, refer to the related descriptions of S102 in the foregoing embodiment. For example, the first apparatus sends the second indication information to the second apparatus, to indicate, to the second apparatus, the first power headroom and the path loss parameter used by the first apparatus to determine the first power headroom. Details are not described herein again.

FIG. 7 is a diagram of a communication apparatus according to this application. The apparatus may include modules that are in one-to-one correspondence with the methods/operations/steps/actions described in any one of the embodiments shown in FIG. 4 to FIG. 6. Such a module may be implemented by a hardware circuit, software, or a combination of a hardware circuit and software.

The apparatus 700 includes a communication unit 701 and a processing unit 702, configured to implement the method performed by each device in the foregoing embodiments. The communication unit 701 is also referred to as a transceiver unit. The transceiver unit includes a sending unit and a receiving unit. The sending unit is configured to send a signal, and the receiving unit is configured to receive a signal.

In a possible implementation, the communication apparatus may be a terminal, or may be an apparatus of a terminal, or may be an apparatus that can be used in cooperation with a terminal. Specifically, the communication unit 701 is configured to receive first indication information from a second apparatus, where the first indication information indicates a path loss parameter of at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to the second apparatus through an environmental scatterer. The processing unit is configured to determine first power headroom of the first terminal based on a path loss parameter for the first terminal. The communication unit 701 is further configured to send second indication information to the second apparatus, where the second indication information indicates the first power headroom of the first terminal, the first power headroom is a difference between maximum transmit power of the first terminal and transmit power of the first signal, and the transmit power of the first signal is determined based on a path loss parameter of the first terminal.

Optionally, the processing unit 702 is configured to process information sent or received by the communication unit 701. For example, the processing unit 702 is configured to: process the first indication information received by the communication unit 701; and perform a first operation on a path loss reference value and a plurality of correlation values, to determine a plurality of path loss parameters of the first terminal.

For specific execution procedures of the communication unit 701 and the processing unit 702 in this implementation, refer to the descriptions of the steps performed by the first apparatus in the foregoing method embodiments and the related descriptions. Details are not described herein again. In the method, the first apparatus may receive the first indication information, to obtain path loss information used to calculate transmit power at which the first signal (for example, an uplink signal used for sensing) is sent, so that the first apparatus calculates the transmit power and/or power headroom more accurately. This helps the first apparatus flexibly adjust signal transmit power based on a change in path loss information in a sensing scenario, so that a requirement on transmit power of a sensing signal is met, thereby improving sensing performance.

In a possible implementation, the communication apparatus may be a network device, or may be an apparatus of a network device, or may be an apparatus that can be used in cooperation with a network device. Specifically, the communication unit 701 is configured to send first indication information to at least one first apparatus, where the first indication information indicates a path loss parameter of the at least one first apparatus. The at least one first apparatus includes a first terminal, the path loss parameter includes at least one of a first path loss value of the first terminal or a first path loss variation value of the first terminal, the first path loss value or the first path loss variation value is used to compensate for a loss in a path for the first terminal to send a first signal, and the path through which the first signal passes includes a path from the first terminal to a second apparatus through an environmental scatterer. The communication unit 701 is further configured to receive second indication information from the first apparatus, where the second indication information indicates first power headroom of the first terminal, the first power headroom is a difference between maximum transmit power of the first terminal and transmit power of the first signal, and the transmit power of the first signal is determined based on the path loss parameter of the first terminal.

For specific execution procedures of the communication unit 701 and the processing unit 702 in this implementation, refer to the descriptions of the steps performed by the second apparatus in the foregoing method embodiments and the related descriptions. Details are not described herein again. In the method, the second apparatus sends the first indication information, to indicate, to the first apparatus, path loss information used to calculate transmit power at which the first signal is sent. This helps the first apparatus flexibly adjust signal transmit power based on a change in path loss information in a sensing scenario, so that a requirement on transmit power of a sensing signal is met, thereby improving sensing performance.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

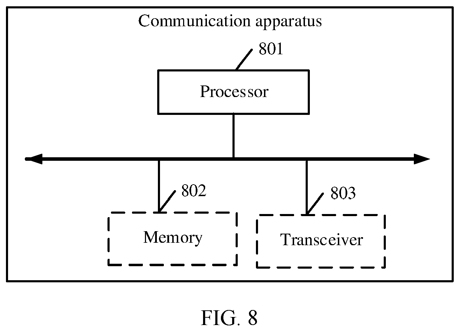

FIG. 8 is a diagram of another communication apparatus according to this application. The communication apparatus may be configured to perform the steps performed by the first apparatus or the second apparatus in the foregoing method embodiments. For details, refer to the related descriptions in the foregoing method embodiments.

The communication apparatus includes a processor 801. Optionally, the communication apparatus further includes a memory 802 and a transceiver 803.

In a possible implementation, the processor 801, the memory 802, and the transceiver 803 are separately connected through a bus, and the memory stores computer instructions.

Optionally, the processing unit 702 in the foregoing embodiment may be specifically the processor 801 in this embodiment. Therefore, specific implementation of the processor 801 is not described again. The communication unit 701 in the foregoing embodiment may be specifically the transceiver 803 in this embodiment. Therefore, specific implementation of the transceiver 803 is not described again.

In this application, the processor may be a general-purpose processor, a digital signal processor, an application-specific integrated circuit, a field programmable gate array or another programmable logic device, a discrete gate, a transistor logic device, or a discrete hardware component, and may implement or perform the method, steps, and logical block diagrams that are disclosed in this application. The general-purpose processor may be a microprocessor, any conventional processor or the like. The steps of the methods disclosed with reference to this application may be directly performed by a hardware processor, or may be performed by a combination of hardware in a processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that is accessible by a computer, but is not limited thereto. The memory in this application may alternatively be a circuit or any other apparatus that can implement a storage function, and is configured to store program instructions and/or data.

This application provides another communication apparatus, and the device includes a processor and an interface. Optionally, a memory is further included. The processor is coupled to the memory, and the processor is configured to read and execute computer instructions stored in the memory, to implement the communication methods in the embodiments shown in FIG. 4 and FIG. 6.

This application provides a computer-readable storage medium. The computer-readable storage medium stores a program or instructions. When the program or the instructions are run on a computer, the computer is caused to perform the communication methods in the embodiments shown in FIG. 4 and FIG. 6.

This application provides a chip or a chip system. The chip or the chip system includes at least one processor and an interface. The interface and the at least one processor are interconnected through a line. The at least one processor is configured to run a computer program or instructions, to perform the communication methods in the embodiments shown in FIG. 4 and FIG. 6.

The interface in the chip may be an input/output interface, a pin, a circuit, or the like.

The chip system may be a system-on-a-chip (system-on-a-chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

This application provides a computer program product. The computer program product includes instructions. When the instructions are run on a computer, the computer is caused to perform the communication methods in the embodiments shown in FIG. 4 and FIG. 6.

An embodiment of this application further provides a communication system. The communication system includes a first communication apparatus and a second communication apparatus. The first communication apparatus is configured to perform all or some steps performed by the first apparatus in the foregoing embodiments. The second communication apparatus is configured to perform all or some steps performed by the second apparatus in the foregoing embodiments.

All or some of the technical solutions provided in this application may be implemented by using software, hardware, firmware, or any combination thereof. When software is used for implementation, all or some of the technical solutions may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or may include a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, embodiments may be mutually referenced. For example, the methods and/or terms in the method embodiments may be mutually referenced. For example, the functions and/or terms in the apparatus embodiments may be mutually referenced. For example, the functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that the modifications and variations fall within the scope of the claims in this application and equivalent technologies thereof.

## Claims

1. A power control method, comprising:
receiving first indication information from a second apparatus, wherein the first indication information indicates a path loss parameter of at least one first apparatus, wherein
the at least one first apparatus comprises a first terminal, the path loss parameter comprises at least one of a first path loss value of the first terminal or a first path loss variation value of the first terminal,
the first path loss value or the first path loss variation value is used to compensate for a loss in a path for the first terminal to send a first signal, and the path through which the first signal passes comprises a path from the first terminal to the second apparatus through an environmental scatterer; and
sending second indication information to the second apparatus, wherein the second indication information indicates first power headroom of the first terminal, the first power headroom is a difference between maximum transmit power of the first terminal and transmit power of the first signal, and the transmit power of the first signal is determined based on a path loss parameter of the first terminal.

2. The method according to claim 1, wherein the path through which the first signal passes comprises one path or a plurality of paths for the first terminal; and
the first indication information indicates a path loss parameter of the path for the first terminal; or
the first indication information indicates a plurality of path loss parameters respectively corresponding to the plurality of paths for the first terminal.

3. The method according to claim 2, wherein the plurality of path loss parameters respectively corresponding to the plurality of paths comprise a path loss reference value and a plurality of correlation values, and the method further comprises:
performing a first operation on the path loss reference value and the plurality of correlation values, to determine the plurality of path loss parameters of the first terminal.

4. The method according to claim 3, wherein the method further comprises:
determining a largest value in the plurality of path loss parameters respectively corresponding to the plurality of paths for the first terminal; and
determining, based on the largest value in the path loss parameters, transmit power at which the first terminal sends the first signal.

5. The method according to any one of claims 1 to 4, wherein the method further comprises:
determining, based on an identifier of the first terminal, a path loss parameter that is in the first indication information and that is associated with the identifier of the first terminal; or
determining, based on location information of the first terminal, a path loss parameter that is in the first indication information and that is associated with the location information of the first terminal.

6. The method according to any one of claims 1 to 4, wherein the first path loss value is determined based on location information of the first terminal, location information of the environmental scatterer, an area of a radar cross section of the environmental scatterer, and a carrier frequency of the first signal; and
the first path loss variation value is a difference between a first measurement value and the first path loss value, and the first measurement value is a path loss value that is determined based on the location information of the first terminal and that is of a line-of-sight path for a reference signal.

7. The method according to claim 1, wherein the second indication information further indicates a path loss parameter used by the first apparatus to determine the first power headroom.

8. A power control method, comprising:
sending first indication information to at least one first apparatus, wherein the first indication information indicates a path loss parameter of the at least one first apparatus, wherein
the at least one first apparatus comprises a first terminal, the path loss parameter comprises at least one of a first path loss value of the first terminal or a first path loss variation value of the first terminal,
the first path loss value or the first path loss variation value is used to compensate for a loss in a path for the first terminal to send a first signal, and the path through which the first signal passes comprises a path from the first terminal to a second apparatus through an environmental scatterer; and
receiving second indication information from the first apparatus, wherein the second indication information indicates first power headroom of the first terminal, the first power headroom is a difference between maximum transmit power of the first terminal and transmit power of the first signal, and the transmit power of the first signal is determined based on a path loss parameter of the first terminal.

9. The method according to claim 8, wherein the path through which the first signal passes comprises one path or a plurality of paths for the first terminal; and
the first indication information indicates a path loss parameter of the path for the first terminal; or
the first indication information indicates a plurality of path loss parameters respectively corresponding to the plurality of paths for the first terminal.

10. The method according to claim 9, wherein the plurality of path loss parameters respectively corresponding to the plurality of paths comprise a path loss reference value and a plurality of correlation values; and the path loss reference value and the plurality of correlation values are used by the first apparatus to determine, based on a first operation, the plurality of path loss parameters of the first terminal.

11. The method according to any one of claims 8 to 10, wherein the first path loss value is determined based on location information of the first terminal, location information of the environmental scatterer, an area of a radar cross section of the environmental scatterer, and a carrier frequency of the first signal; and
the first path loss variation value is a difference between a first measurement value and the first path loss value, and the first measurement value is a path loss value that is determined based on the location information of the first terminal and that is of a line-of-sight path for a reference signal.

12. The method according to claim 8, wherein the second indication information further indicates a path loss parameter used by the first apparatus to determine the first power headroom.

13. A communication apparatus, comprising a communication unit and a processing unit, wherein the communication unit and the processing unit are configured to perform the method according to any one of claims 1 to 7 or claims 8 to 12.

14. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 7 or claims 8 to 12 by using a logic circuit or by executing code instructions.

15. A computer-readable storage medium, wherein the computer-readable storage medium stores a computer program or instructions, and when the computer program or the instructions are executed by a communication apparatus, the method according to any one of claims 1 to 7 or claims 8 to 12 is implemented.

16. A chip system, wherein the chip system comprises a processor and an interface, and the processor is configured to execute a computer program, to cause the chip system to implement the method according to any one of claims 1 to 7 or the method according to any one of claims 8 to 12.

17. A computer program product, comprising instructions, wherein when the instructions are run on a computer, the computer is caused to perform the method according to any one of claims 1 to 7 or the method according to any one of claims 8 to 12.

18. A communication system, wherein the communication system comprises an apparatus configured to perform the method according to any one of claims 1 to 7, and an apparatus configured to perform the method according to any one of claims 8 to 12.
